(19) Europäisches Patentamt
European Patent Office
Office européen des brevets

(11) **EP 0 926 031 B1**

(12) **FASCICULE DE BREVET EUROPEEN**

(45) Date de publication et mention
de la délivrance du brevet:
**26.04.2006 Bulletin 2006/17**

(51) Int Cl.:
***B60T 8/00*** *(2006.01)*

(21) Numéro de dépôt: **98403205.2**

(22) Date de dépôt: **18.12.1998**

(54) **Procédé de commande de la pression de freinage sur les roues d'un véhicule lors d'un freinage en virage**

Verfahren zur Kraftfahrzeug-Räderbremsdrucksteuerung beim Bremsen in einer Kurve

Procedure for controlling vehicle wheel brake pressure during braking in a curve

(84) Etats contractants désignés:
**DE ES GB IT**

(30) Priorité: **22.12.1997 FR 9716224**

(43) Date de publication de la demande:
**30.06.1999 Bulletin 1999/26**

(73) Titulaire: **Renault s.a.s.**
**92100 Boulogne Billancourt (FR)**

(72) Inventeurs:
• **Delrieu, Frédéric**
**92800 Puteaux (FR)**
• **Fervel, Marc**
**75014 Paris (FR)**

(56) Documents cités:
**DE-A- 4 109 925         DE-A- 4 141 877**
**DE-A- 19 522 632       DE-C- 19 510 104**

**Description**

L'invention concerne la commande de la pression de freinage sur les roues d'un véhicule lors d'un freinage en virage.

Le document DE 4 141 877 A décrit un procédé d'après le préambule de la revendication 1.

Les véhicules équipés de systèmes de freinage classiques présentent des risques d'instabilité dans certaines situations de freinage en virage. Une solution consiste à adopter un compromis sur la répartition de freinage entre le train avant et le train arrière et sur la définition du châssis. Cependant, ces solutions peuvent entraîner une dégradation du comportement routier (châssis peu mobile et perte en motricité). En outre, certaines conditions de freinage en courbe restent critiques quel que soit le réglage du système de freinage et du châssis. Ces cas critiques nécessitent une activité conducteur importante et adaptée.

L'invention vise à apporter une solution à ces problèmes et propose une optimisation de la commande des pressions de freinage en virage de façon à gagner en sécurité et en performance.

Un but de l'invention est d'optimiser la stabilité transversale du véhicule et la distance d'arrêt en virage.

Un autre but de l'invention est de diminuer considérablement l'activité conducteur par rapport à un système de freinage classique.

L'invention propose donc un procédé de commande de la pression de freinage sur les roues d'un véhicule lors d'un freinage en virage.

Selon une caractéristique générale de l'invention, on applique aux roues extérieures une pression de freinage déterminée selon une première loi de répartition (loi de répartition longitudinale classique), et on applique aux roues intérieures une pression de freinage inférieure ou égale à celle appliquée aux roues extérieures, et déterminée selon une deuxième loi de répartition, différente de la première, et la diminution de la pression des roues interieures étant régulée par la valeur instantanée de l'accélération transversale du véhicule.

Selon un mode de mise en oeuvre de l'invention, on détermine à chaque instant la pression de freinage sur une roue intérieure à partir d'un critère d'équi-adhérence entre ladite roue intérieure et la roue extérieure du même train, ce critère d'équi-adhérence étant établi à partir de la charge verticale sur chacune des roues. On module alors à chaque instant ladite pression de freinage ainsi déterminée en fonction de la valeur de l'accélération transversale audit instant.

Plus précisément, si l'accélération transversale est supérieure à un premier seuil prédéterminé (par exemple 2 m/s$^2$), on applique aux roues intérieures une première pression de freinage plus faible que celle appliquée aux roues extérieures.

En présence d'un capteur de pression dans le maître-cylindre, la deuxième loi de répartition est, également avantageusement régulée en fonction de la pression dans le maître-cylindre.

Ainsi, si l'accélération transversale est supérieure à un deuxième seuil (par exemple 7 m/s$^2$) plus élevée que le premier seuil, et si la pression dans le maître-cylindre est inférieure à une limite prédéterminée (40 bars), ce qui correspond à une forte accélération transversale et à un freinage léger, on applique alors aux roues intérieures une deuxième pression de freinage plus faible que la première pression. En d'autres termes, la dissymétrie droite/gauche est alors augmentée.

En présence d'un capteur de la vitesse du véhicule, la deuxième loi de répartition est également avantageusement régulée en fonction de la vitesse du véhicule.

Ainsi, si la vitesse du véhicule est supérieure à une vitesse limite prédéterminée (par exemple 80 km/h), on applique alors avantageusement aux roues intérieures une troisième pression de freinage qui est elle-même également plus faible que la première pression. On augmente donc également la dissymétrie droite/gauche lorsque la vitesse augmente, ce qui a pour effet d'amplifier le couple qui contre le survirage.

Dans tous les cas qui viennent d'être décrits, on applique donc avantageusement à la roue intérieure avant une pression de freinage inférieure à celle du maître-cylindre et on applique à la roue intérieure arrière une pression de freinage inférieure à celle du maître-cylindre limitée par la loi de répartition longitudinale.

Par contre, si l'accélération transversale est inférieure au premier seuil prédéterminé, ce qui correspond à une faible accélération transversale et à un léger freinage, on applique à la roue intérieure avant une pression de freinage égale à celle du maître-cylindre et on applique à la roue intérieure arrière une pression de freinage égale à celle du maître-cylindre limitée par la loi de répartition longitudinale.

En d'autres termes, on annule la dissymétrie droite/gauche prévue selon l'invention pour ne pas générer de perturbations transversales, étant donné que le comportement naturel du véhicule dans ces conditions est stable.

En fait, dans ces conditions, la pression de freinage est alors identique sur les roues intérieures et extérieures d'un même train.

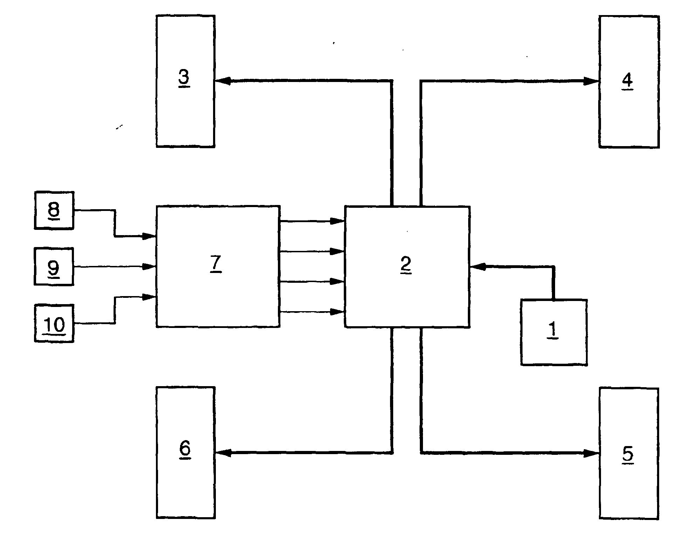

D'autres avantages et caractéristiques de l'invention apparaîtront à l'examen de la description détaillée d'un mode de mise en oeuvre, nullement limitatif, et de la figure unique sur laquelle on a représenté très schématiquement un synoptique d'un système de freinage selon l'invention permettant la mise en oeuvre du procédé selon l'invention.

Le véhicule est équipé d'un système de freinage hydraulique qui comprend un maître-cylindre 1, un bloc électro-hydraulique 2 et quatre freins mécaniques 3, 4, 5 et 6. Le bloc électro-hydraulique est piloté par un calculateur 7. Il limite la pression fournie par le maître-cylindre sur chacun des freins en fonction des quatre consignes de pression qu'il reçoit.

Lorsque le conducteur freine, la pression dans le maître-cylindre augmente. Un capteur de pression 8 délivre au calculateur 7 la valeur de la pression PMC dans le maître-cylindre. Le calculateur 7 détermine alors quatre consignes de pression de freinage pour les quatre freins. Ces consignes sont calculées à partir d'informations fournies par un capteur d'accélération transversale 9 et de quatre capteurs de vitesses roues 10.

Comme on va le voir maintenant plus en détail, le procédé de commande selon l'invention permet, à partir d'un certain seuil d'accélération transversale, de limiter la pression de freinage sur les roues intérieures pendant le virage. Cette limitation est réalisée par le bloc électro-hydraulique piloté 2. Par contre, en-deçà de ce seuil d'accélération transversale, la limitation de la pression de freinage est annulée et la pression de freinage sur la roue intérieure d'un train est égale à la pression de freinage sur la roue extérieure de ce train.

A cet égard, d'une façon générale, la pression de freinage sur les roues extérieures au virage est la pression de freinage appliquée classiquement dans les systèmes de freinage de l'art antérieur. Plus précisément, la pression de freinage sur la roue extérieure avant est égale à la pression PMC dans le maître-cylindre, tandis que la pression de freinage appliquée sur la roue extérieure arrière du véhicule est égale à la pression Pmcl qui est la pression PMC limitée de façon classique par une répartition longitudinale. Plus précisément, l'homme du métier sait que la pression Pmcl est égale à la pression PMC en-deçà d'un certain seuil de pression, puis est limitée à ce seuil lorsque la pression PMC dans le maître-cylindre devient supérieure au seuil.

Les valeurs fournies par les différents capteurs sont échantillonnées à une fréquence d'échantillonnage choisie.

Selon l'invention, d'une façon générale, on détermine à chaque instant d'échantillonnage la pression de freinage sur une roue intérieure à partir d'un critère d'équi-adhérence entre ladite roue intérieure et la roue extérieure du même train, ce critère d'équi-adhérence étant établi à partir de la charge verticale sur chacune des roues, puis on module ladite pression de freinage ainsi déterminée en fonction de la valeur d'accélération transversale audit instant d'échantillonnage, et également en fonction de la vitesse du véhicule audit instant d'échantillonnage.

On répète ces trois étapes à l'instant d'échantillonnage suivant.

Le niveau d'adhérence $\mu$ d'un pneumatique est défini comme le rapport entre l'effort longitudinal Fx qu'il produit et l'effort vertical Fz qu'il reçoit : $\mu = F_x / F_z$

Le critère d'équi-adhérence consiste à répartir les pressions de freinage de manière à obtenir le même niveau d'adhérence $\mu = F_x / F_z$ entre les roues extérieures et les roues intérieures :

$$\text{Equi-adhérence du train avant :} \quad \frac{F_{Xavi}}{F_{Zavi}} = \frac{F_{Xave}}{F_{Zave}}$$

$$\text{Equi-adhérence du train arrière :} \quad \frac{F_{Xari}}{F_{Zari}} = \frac{F_{Xare}}{F_{Zare}}$$

avec

Fxavi : effort longitudinal sur la roue avant intérieure
Fzavi : effort vertical sur la roue avant intérieure
Fxave : effort longitudinal sur la roue avant extérieure
Fzave : effort vertical sur la roue avant extérieure
Fxari : effort longitudinal sur la roue arrière intérieure
Fzari : effort vertical sur la roue arrière intérieure
Fxare : effort longitudinal sur la roue arrière extérieure
Fzare : effort vertical sur la roue arrière extérieure

Le signe de l'accélération transversale permet d'identifier le côté extérieur et le côté intérieur au virage.

La relation entre l'effort longitudinal et la pression de freinage appliquée à une roue est caractérisée par un paramètre lié au type de frein. Ce paramètre est identique pour les roues gauche et droite d'un train. La relation entre les pressions roues intérieures et roues extérieures est donc :

$$\text{Pression avant intérieure :} \quad P_{avi} = \frac{F_{Zavi}}{F_{Zave}} \cdot P_{ave}$$

Pression arrière intérieure : $P_{ari} = \dfrac{\phantom{xxxx}}{F_{Zare}} \cdot P_{are}$

avec

Pavi : pression sur la roue avant intérieure
Pave : pression sur la roue avant extérieure
Pari : pression sur la roue arrière intérieure
Pare : pression sur la roue arrière extérieure

Selon l'invention, on ne modifie pas les pressions sur les roues extérieures. La pression sur la roue extérieure avant est la pression maître-cylindre PMC, la pression Pmcl sur la roue extérieure arrière est la pression maître-cylindre limitée par la répartition longitudinale classique. Les quatre consignes de pression sont donc :

$$P_{ave} = PMC \qquad P_{avi} = \frac{F_{Zavi}}{F_{Zave}} \cdot PMC$$

$$P_{are} = P_{mcl} \qquad P_{ari} = \frac{F_{Zari}}{F_{Zare}} \cdot P_{mcl}$$

Cette répartition des pressions de freinage permet d'exploiter au mieux chaque pneumatique sans blocage prématuré de l'une des roues. Le maintien en adhérence des quatre pneumatiques assure lors de la montée en pression une décélération optimale du véhicule.

En virage, les roues intérieures déchargées sont moins sollicitées en effort de freinage que les roues extérieures. La dissymétrie droite/gauche crée un moment de lacet dirigé vers l'extérieur du virage. Cet effet sous-vireur compense la tendance naturelle du véhicule qui est de survirer : le délestage du train arrière et le maintien en adhérence du train avant rend en effet le véhicule plus mobile, phénomène qui sans action correctrice provoque une instabilité.

Les consignes de pression sur la roue avant intérieure et sur la roue arrière intérieure peuvent s'écrire à l'aide des formules (I) et (II) ci-dessous :

$$Pavi = \frac{M1/2 - (Kav + \varepsilon1 + \varepsilon2)\,\gamma t}{M1/2 + (Kav + \varepsilon1 + \varepsilon2)\,\gamma t} \cdot PMC \qquad (I)$$

$$Pari = \frac{M2/2 - (Kar + \varepsilon1 + \varepsilon2)\,\gamma t}{M2/2 + (Kar + \varepsilon1 + \varepsilon2)\,\gamma t} \cdot Pmcl \qquad (II)$$

dans lesquelles :

$\gamma t$ désigne l'accélération transversale,
M1 désigne la masse du train avant,
M2 désigne la masse du train arrière,
Kav et Kar représentent des coefficients liés aux caractéristiques statiques du véhicule.

Plus précisément, ces coefficients Kav et Kar sont donnés par les formules (III) et (IV) :

$$Kav = (M/E1) \cdot [L2.S1/L+C1.h0/(C1+C2-M.g.h0)] \qquad (III)$$

$$Kar = (M/E2) \cdot [L1.S2/L+C2.h0/(C1+C2-M.g.h0)] \qquad (IV)$$

dans lesquelles :

M désigne la masse totale du véhicule,
h0 désigne la hauteur du centre de gravité,
L l'empattement,
E1 et E2 les voies avant et arrière,
S1 et S2 les hauteurs des centres de roulis avant et arrière,
C1 et C2 les raideurs anti-roulis avant et arrière, et
g la valeur de la gravité (9,82 m/s$^2$).

Les coefficients $\varepsilon 1$ et $\varepsilon 2$ dans les formules (I) et (II), vont permettre de moduler ces consignes de pression en fonction du niveau d'accélération transversale et du niveau de vitesse du véhicule.

Plus précisément, sous faible accélération transversale et léger freinage, le comportement naturel du véhicule est stable. La faible dissymétrie droite/gauche des efforts calculés par le critère d'équi-adhérence ci-dessus, est annulée pour ne pas générer de perturbations transversales.

En d'autres termes, si l'accélération transversale est inférieure à un premier seuil prédéterminé (par exemple 2 m/s$^2$), on applique à la roue intérieure avant une pression de freinage égale à celle du maître-cylindre PMC et on applique à la roue intérieure arrière une pression de freinage Pmcl égale à celle du maître-cylindre limitée par la loi de répartition longitudinale classique. Les pressions de freinage sur les roues intérieures et extérieures d'un même train sont donc égales.

Lorsque le freinage s'intensifie, on va alors appliquer les formules (I) et (II) ci-dessus en modulant en outre la valeur des coefficients $\varepsilon 1$ et $\varepsilon 2$.

Plus précisément, sous forte accélération transversale et freinage léger, les efforts de freinage sont faibles et le couple de lacet dû à la dissymétrie droite/gauche est faible. L'effet correctif de sous-virage n'est pas suffisant pour contrer le survirage naturel du véhicule. On ajoute alors au paramètre Kav et Kar un terme correctif $\varepsilon 1$ prédéterminé. Il en est ainsi, par exemple si le niveau d'accélération transversale est supérieur à 7m/s$^2$ par exemple, et si la pression PMC dans le maître-cylindre est inférieure à 40 bars.

Par ailleurs, à vitesse élevée, le comportement du véhicule est naturellement plus dynamique. Aussi, pour favoriser la stabilité du véhicule, on augmente alors la dissymétrie droite-gauche lorsque la vitesse augmente, ce qui a pour effet d'amplifier le couple contre le survirage.

Plus précisément, si la vitesse du véhicule est par exemple supérieure à 80 km/h, on ajoute alors aux paramètres Kav et Kar un deuxième terme correctif $\varepsilon 2$ prédéterminé.

Si l'une ou l'autre de ces deux conditions qui viennent d'être évoquées n'est pas réalisée, on n'applique pas de terme correctif $\varepsilon 1$ ou $\varepsilon 2$ aux paramètres Kav et Kar.

Ainsi, si d'une part aucune de ces deux conditions n'est réalisée, c'est-à-dire si l'on n'est ni sous forte accélération transversale et freinage léger et si la vitesse du véhicule est inférieure à 80 km/h, et si d'autre part le niveau d'accélération transversale est supérieur au premier seuil prédéterminé (2 m/s$^2$, par exemple), on applique alors la correction de pression en utilisant uniquement le critère d'équi-adhérence [formules (I) et (II) avec $\varepsilon 1=0$ et $\varepsilon 2=0$].

Bien entendu, le passage des différentes lois de corrections s'effectue au moyen de courbes transitoires permettant d'éviter des changements brusques de pressions de freinage.

L'invention permet donc d'assurer un comportement routier neutre et stable lors d'un freinage en virage.

L'activité conducteur est considérablement diminuée par rapport à un système de freinage classique. Il n'y a pas d'amorce de blocage sur les roues intérieures, et le pouvoir directeur du train avant et la capacité de guidage du train arrière sont préservés. Les distances d'arrêt sont réduites et le conducteur a la possibilité d'amener le véhicule à la décélération maximale sans déclencher une éventuelle régulation d'antiblocage. L'usure des pneumatiques est ainsi minimisée.

Le châssis gagne en compromis performance/stabilité. La contrainte de stabilité lors d'un freinage en courbe est levée par le système de freinage, ce qui permet de concevoir un châssis plus performant en terme de mobilité et de motricité.

Enfin, dans l'exemple qui vient d'être décrit, on a prévu un certain nombres de capteurs. Ceci étant, ce nombre peut être réduit car certaines variables utilisées par le procédé selon l'invention peuvent être estimées à partir d'autres variables. C'est notamment le cas de l'accélération transversale qui peut être estimée à partir des quatre vitesses roues. Cependant, il est nettement préférable de conserver le nombre de capteurs décrits ci-avant pour obtenir une meilleure performance et fiabilité du système.

Ceci étant, sans la connaissance de la pression dans le maître-cylindre PMC, le système limite les pressions intérieures Pi par l'application d'un retard R et d'un gradient G de montée en pression. Ce retard et ce gradient sont uniquement paramétrés en fonction de l'accélération transversale $\gamma t$ de manière à se rapprocher de la répartition équi-adhérence.

A titre d'exemple, si le conducteur freine à t0 avec une accélération transversale initiale $\gamma t0$ : tant que $t<t0 + R$ $(\gamma t0)$, alors Pi bloquée à 0 ; et si $t>t0 + R(\gamma t0)$, alors le système limite la montée en pression Pi au gradient $G(\gamma t)$.

A titre d'exemple de paramétrage :

| | | |
|---|---|---|
| si $\gamma t<4m/s2$ | Rav$(\gamma t)=0$ | Rar$(\gamma t)=0$ |
| si $\gamma t>4m/s2$ | Rav$(\gamma t)= 0,4*(\gamma t-4)$ | Rar$(\gamma t)=0,6*(\gamma t-4)$ |
| si $\gamma t<4m/s2$ | | pleine ouverture, pas de limitation par le gradient |
| si $\gamma t>4m/s2$ | | limitation avec un gradient |
| | | Gav$(\gamma t)=60-5*\gamma t$ |
| et | | Gar$(\gamma t)=60-5*\gamma t$ |

Dans ce qui précède, Rav$(\gamma t)$ désigne le retard pour le train avant, Rar$(\gamma t)$ le retard pour le train arrière, Gav $(\gamma t)$ le gradient pour le train avant, et Gar$(\gamma t)$ le gradient pour le train arrière.

## Revendications

1. Procédé de commande de la pression de freinage sur les roues d'un véhicule automobile lors d'un freinage en virage, qui comprend une détection des roues intérieures et extérieures, et dans lesquels une pression de freinage est appliquée aux roues extérieures selon une première loi de répartition, et lors du virage, une pression de freinage, déterminée selon une deuxième loi de répartition, différente de la première loi de répartition, est appliquée aux roues intérieures, **caractérisé par le fait que** cette pression apliquée aux roues intérieures est égale ou inférieure à la pression de freinage appliquée aux roues extérieures, la diminution de la pression des roues intérieures étant régulée par la valeur instantanée de l'accélération transversale du véhicule.

2. Procédé selon la revendication 1, **caractérisé par le fait qu'**on détermine à chaque instant la pression de freinage sur une roue intérieure à partir d'un critère d'équi-adhérence entre ladite roue intérieure et la roue extérieure du même train, ce critère d'équi-adhérence étant établi à partir de la charge verticale sur chacune des roues, et **par le fait qu'**on module à chaque instant ladite pression de freinage ainsi déterminée en fonction de la valeur de l'accélération transversale audit instant.

3. Procédé selon la revendication 1 ou 2, **caractérisé par le fait qu'**en l'absence d'information sur la pression dans le maître-cylindre, on limite la pression sur les roues intérieures en appliquant un retard et un gradient de montée en pression, ce retard et ce gradient dépendant uniquement de la valeur de l'accélération transversale.

4. Procédé selon la revendication 1 ou 2, **caractérisé par le fait que** si l'accélération transversale est supérieure à un premier seuil prédéterminé, on applique aux roues intérieures une première pression de freinage plus faible que celle appliquée aux roues extérieures.

5. Procédé selon la revendication 4, **caractérisé par le fait que** la deuxième loi de répartition est régulée en outre par la pression dans le maître-cylindre (1), et **par le fait que** si l'accélération transversale est supérieure à un deuxième seuil plus élevé que le premier seuil et si la pression dans le maître-cylindre est inférieure à une limite prédéterminée, on applique aux roues intérieures une deuxième pression de freinage plus faible que 1a première pression.

6. Procédé selon la revendication 4 ou 5, **caractérisé par le fait que** la deuxième loi de répartition est régulée en outre par la vitesse du véhicule et **par le fait que** si la vitesse du véhicule est supérieure à une vitesse-limite prédéterminée, on applique aux roues intérieures une troisième pression de freinage plus faible que la première pression.

**7.** Procédé selon l'une des revendication 4 à 6, **caractérisé par le fait qu'**on applique à la roue intérieure avant une pression de freinage inférieure à celle (PMC) du maître-cylindre et on applique à la roue intérieure arrière une pression de freinage inférieure à celle (Pmc1) du maître-cylindre limitée par la première de répartition.

**8.** Procédé selon l'une des revendications 4 à 6, **caractérisé par le fait que** si l'accélération transversale est inférieure au premier seuil prédéterminé, on applique à la roue intérieure avant une pression de freinage égale à celle (PMC) du maître-cylindre et on applique à la roue intérieure arrière une pression de freinage (Pmc1) apliquée aux roues intérieures est égale à celle du maître-cylindre limitée par la première loi de répartition.

**9.** Procédé selon l'une des revendications précédentes, **caractérisé par le fait qu'**on détermine les roues intérieures et extérieures en fonction du signe de l'accélération transversale.

**Patentansprüche**

**1.** Verfahren zur Steuerung des Bremsdrucks auf die Räder eines Kraftfahrzeugs beim Bremsen in einer Kurve, das eine Bestimmung der inneren und äußeren Räder umfasst und in dem ein Bremsdruck auf die äußeren Räder gemäß einer ersten Verteilungsregel angewandt wird und bei einer Kurve ein Bremsdruck, der gemäß einer zweiten Verteilungsregel bestimmt wird, die von der ersten Verteilungsregel verschieden ist, auf die inneren Räder angewandt wird, **dadurch gekennzeichnet, dass** dieser Druck, der auf die inneren Räder angewandt wird, gleich oder niedriger dem auf die äußeren Räder angewandten Bremsdruck ist, wobei die Verringerung des Drucks der inneren Räder durch den Momentanwert der Querbeschleunigung des Fahrzeugs reguliert wird.

**2.** Verfahren gemäß Anspruch 1, **dadurch gekennzeichnet, dass** man in jedem Moment den Bremsdruck auf einem inneren Rad auf der Grundlage eines Kriteriums der Gleich-Haftung zwischen dem inneren Rad und dem äußeren Rad desselben Strangs bestimmt, wobei dieses Kriterium der Gleich-Haftung auf der Basis der vertikalen Belastung auf jedem der Räder ermittelt wird und **dadurch**, dass man zu jeder Zeit den so ermittelten Bremsdruck in Abhängigkeit vom Wert der Querbeschleunigung zu diesem Zeitpunkt moduliert.

**3.** Verfahren gemäß Anspruch 1 oder 2, **dadurch gekennzeichnet, dass** bei Abwesenheit von Information über den Druck im Hauptbremszylinder man den Druck auf die inneren Räder begrenzt, indem man eine Verzögerung und einen Gradienten des Druckanstiegs anwendet, wobei diese Verzögerung und dieser Gradient nur vom Querbeschleunigungswert abhängen.

**4.** Verfahren gemäß Anspruch 1 oder 2, **dadurch gekennzeichnet, dass**, wenn die Querbeschleunigung größer als ein vorbestimmter Schwellenwert ist, man auf die inneren Räder einen ersten Bremsdruck anwendet, der schwächer ist als der derjenige, der auf die äußeren Räder angewendet wird.

**5.** Verfahren gemäß Anspruch 4, **dadurch gekennzeichnet, dass** die zweite Verteilungsregel darüber hinaus durch den Druck im Hauptbremszylinder (1) reguliert wird, und **dadurch**, dass, wenn die Querbeschleunigung größer als eine zweite Schwelle ist, welche höher als die erste Schwelle ist, und wenn der Druck im Hauptbremszylinder geringer als eine vorbestimmte Grenze ist, man auf die inneren Räder einen zweiten Bremsdruck ausübt, der schwächer ist als der erste Druck.

**6.** Verfahren gemäß Ansprüchen 4 oder 5, **dadurch gekennzeichnet, dass** die zweite Verteilungsregel darüber hinaus durch die Geschwindigkeit des Fahrzeugs geregelt wird, und **dadurch**, dass, wenn die Fahrzeuggeschwindigkeit größer als eine vorbestimmte Grenzgeschwindigkeit ist, man auf die inneren Räder einen dritten Bremsdruck anwendet, der geringer als der erste Druck ist.

**7.** Verfahren gemäß einem der Ansprüche 4 bis 6, **dadurch gekennzeichnet, dass** man auf das vordere innere Rad einen Bremsdruck anwendet, der geringer ist als derjenige (PMC) des Hauptbremszylinders, und man auf das hintere innere Rad einen Bremsdruck anwendet, der geringer ist als derjenige (PMCL) des Hauptbremszylinders, begrenzt durch die erste Verteilungsregel.

**8.** Verfahren gemäß einem der Ansprüche 4 bis 6, **dadurch gekennzeichnet, dass**, wenn die Querbeschleunigung geringer ist als eine erste vorbestimmte Schwelle, man auf das vordere innere Rad einen Bremsdruck anwendet, der gleich demjenigen (PMC) des Hauptbremszylinders ist, und man auf das hintere innere Rad einen Bremsdruck (PMCL) anwendet, der gleich demjenigen des Hauptbremszylinders ist, begrenzt durch die erste Verteilungsregel.

9. Verfahren gemäß einem der vorhergehenden Ansprüche, **dadurch gekennzeichnet, dass** man die inneren und die äußeren Räder in Abhängigkeit des Vorzeichens der Querbeschleunigung bestimmt.


**Claims**

1. A method for controlling the braking pressure on the wheels of a vehicle braking on a bend, which comprises a detection of the inner and outer wheels, and in which a braking pressure is applied to the outer wheels according to a first distribution law and, during the bend, a braking pressure, calculated according to a second distribution law which is different from the first distribution law, is applied to the inner wheels, **characterised in that** the pressure applied to the inner wheels is equal to or lower than the braking pressure applied to the outer wheels, the reduction of the pressure on the inner wheels being regulated by the instantaneous value of the transverse acceleration of the vehicle.

2. A method as claimed in claim 1, **characterised in that** the braking pressure on an inner wheel is calculated at each instant from a criterion of equal adherence between this inner wheel and the outer wheel of the same train, this criterion of equal adherence being established from the vertical load on each of the wheels, and from the fact that the braking pressure calculated in this way is modulated at each instant as a function of the value of the transverse acceleration at that instant.

3. A method as claimed in claim 1 or 2, **characterised in that** in the absence of information on the pressure in the master cylinder, the pressure on the inner wheels is limited by applying a pressure increase delay and gradient, this delay and gradient depending solely on the value of the transverse acceleration.

4. A method as claimed in claim 1 or 2, **characterised in that** if the transverse acceleration is greater than a first predetermined threshold, a first braking pressure lower than that applied to the outer wheels is applied to the inner wheels.

5. A method as claimed in claim 4, **characterised in that** the second distribution law is further regulated by the pressure in the master cylinder (1) and by the fact that if the transverse acceleration is greater than a second threshold higher than the first threshold and if the pressure in the master cylinder is below a predetermined limit, a second braking pressure lower than the first pressure is applied to the inner wheels.

6. A method as claimed in claim 4 or 5, **characterised in that** the second distribution law is further regulated by the vehicle speed and by the fact that if the vehicle speed is greater than a predetermined limit speed, a third braking pressure lower than the first pressure is applied to the inner wheels.

7. A method as claimed in one of claims 4 to 6, **characterised in that** a braking pressure lower than that (PMC) of the master cylinder is applied to the front inner wheel, and a braking pressure lower than that (Pmc1) of the master cylinder limited by the first distribution law is applied to the rear inner wheel.

8. A method as claimed in one of claims 4 to 6, **characterised in that** if the transverse acceleration is lower than the first predetermined threshold, a braking pressure equal to that (PMC) of the master cylinder is applied to the front inner wheel and a braking pressure (Pmc1) equal to that that of the master cylinder limited by the first distribution law is applied to the rear inner wheel.

9. A method as claimed in one of the preceding claims, **characterised in that** the inner and outer wheels are determined as a function of the sign of the transverse acceleration.